# Europäisches Patentamt
# European Patent Office
# Office européen des brevets

(19)

(11) Veröffentlichungsnummer: **0 114 923**
**B1**

(12)

# EUROPÄISCHE PATENTSCHRIFT

(45) Veröffentlichungstag der Patentschrift:
**17.09.86**

(51) Int. Cl.⁴: **B 03 B 5/36**

(21) Anmeldenummer: **83107380.4**

(22) Anmeldetag: **27.07.83**

(54) Verfahren und Einrichtung zum Trennen verschiedenartiger Bestandteile.

(30) Priorität: **26.01.83 DE 3302490**

(43) Veröffentlichungstag der Anmeldung:
**08.08.84 Patentblatt 84/32**

(45) Bekanntmachung des Hinweises auf die Patenterteilung:
**17.09.86 Patentblatt 86/38**

(84) Benannte Vertragsstaaten:
**AT BE CH DE FR GB IT LI LU NL SE**

(56) Entgegenhaltungen:
**BE - A - 853 969**
**DE - C - 408 007**
**FR - A - 1 060 836**
**FR - A - 1 141 248**
**FR - A - 2 202 733**
**US - A - 1 943 861**
**US - A - 2 590 756**
**US - A - 3 019 900**

(73) Patentinhaber: **Carl Kiesow, Rohstoffrückgewinnung, Quickborner Strasse 132, D-2000 Norderstedt (DE)**

(72) Erfinder: **Kiesow, Carl, von Humboldt Weg 14, D-2000 Norderstedt (DE)**

(74) Vertreter: **Hoormann, Walter, Dr.-Ing. et al, FORRESTER & BOEHMERT Widenmayerstrasse 4/I, D-8000 München 22 (DE)**

**Beschreibung**

Die Erfindung betrifft einen Sinkscheider zum Trennen verschiedenartiger Bastandteile eines Aufbereitungsgutes, mit einem Schwertrübe enthaltenden Behälter, der mittels einer sich von oberhalb des Schwertrübespiegels in die Schwertrübe erstreckenden Trennwand in eine Sinkkammer und eine hiermit kommunizierende Aushebekammer unterteilt ist, wobei in der Sinkkammer zum Flüssigkeitsspiegel aufgeschwommenes Schwimmgut über ein Überlaufwehr nach aussen abzugeben ist und auf den Behälterboden abgesunkenes Sinkgut mittels eines in der Aushebekammer um eine horizontale Achse drehbar angeordneten, angetriebenen Schaufelrades aus dem Behälter auszuheben und von dem Schaufelrad nach aussen abzugeben ist.

Sinkscheider, die in verschiedener Ausgestaltung bekannt sind, werden bereits seit längerer Zeit im Bergbau zur Aufbereitung von Kohle und Erz verwendet. In jüngerer Zeit haben sie auch für ein Recycling verschiedener Materialien, beispielsweise von Metallen, Anwendung gefunden, wobei ein bevorzugtes Anwendungsgebiet in der Wiedergewinnung wertvoller Metalle aus Schrott, insbesondere Autoschrott, liegt. Hierfür ist auch der Gegenstand der vorliegenden Erfindung in besonderer Weise bestimmt und geeignet.

Bei Sinkscheidern wird bekanntlich das Aufbereitungsgut in eine Schwertrübe eingegeben bzw. auf diese aufgegeben, wobei das sog. Schwimmgut, dessen spezifisches Gewicht leichter ist als das spezifische Gewicht der Schwertrübe, von der Oberfläche der Schwertrübe abgezogen wird und das Sinkgut, dessen spezifisches Gewicht grösser ist als dasjenige der Schwertrübe, aus der Schwertrübe ausgehoben wird. Dabei enthält das Aufbereitungsgut in der Regel auch Bestandteile, die etwa das gleiche spezifische Gewicht wie die Schwertrübe aufweisen und infolgedessen in der Schwertrübe schweben. Auch wird von dem absinkenden Sinkgut in der Regel ein bestimmter Anteil Schwimmgut zunächst mit unter den Schwertrübespiegel nach unten genommen, der danach wieder zum Schwertrübespiegel aufschwimmen muss, wenn er dort als Schwimmgut mit abgezogen werden soll. Bei der Aufbereitung mit bekannten Sinkscheidern wird daher z.T. ein beachtlicher Anteil von leichtem Gut, welches an sich zum Schwimmgut oder zum Schwebegut gehört, mit dem Sinkgut ausgetragen. Dieses hat zur Folge, dass das Sinkgut aufgrund einer nicht hinreichenden Trennschärfe des Sinkscheiders entsprechend verunreinigt wird, wodurch sein Wert — je nach Grösse des Verunreinigungsgrades — häufig beachtlich sinkt.

Aus der US-A-3 019 900 ist ein Sinkscheider der eingangs beschriebenen Gattung bekannt, bei dem das Sinkgut — also derjenige Anteil des in die Schwertrübe eingegebenen Aufbereitungsgutes, dessen spezifisches Gewicht grösser ist als dasjenige der Schwertrübe — auf den nach unten geneigten Boden der Sinkkammer in Richtung auf die im wesentlichen vollständig von dem als Ausheborgan dienenden Schaufelrad ausgefüllte Sinkkammer absinkt und seitlich in das Schaufelrad hineinrutschen soll. Eine solche Arbeitsweise ist bei einem Aufbereitungsgut, dessen Sinkgut aus Metall unterschiedlicher Partikelgrösse besteht, wie dieses bei aufzubereitendem Autoschrott der Fall ist, nicht durchführbar. Denn das aus der Sinkkammer unterhalb der Trennwand in Richtung auf die Aushebekammer rutschende Gut, welches von der Seite her in die Tasche des Schaufelrades hineinrutschen soll, erfährt hierbei durch das Schaufelrad selbst keinerlei aktive Unterstützung. Vielmehr wirkt das bei diesem vorbekannten Sinkscheider um eine senkrecht zur Trennwand verlaufende, horizontale Drehachse rotierende Schaufelrad aufgrund seiner Bewegung eher abweisend auf das sich auf das Schaufelrad zu bewegende Gut, so dass sich dieses vor dem Schaufelrad aufbaut und vom Sinkkammerboden aus in der Sinkkammer hochwächst. Es ist ersichtlich, dass dabei von dem Sinkgut ein beachtlicher Teil von Gut eingeschlossen wird und das Sinkgut entsprechend verunreinigt, welches an sich aufgrund seines spezifischen Gewichtes zum Schwimmgut gehört.

Es kommt hinzu, dass ein Teil des abgesunkenen Sinkgutes durch den Spalt zwischen Schaufelrad und dem Behälterboden hindurchgleitet und den freien Raum zwischen dem Schaufelrad und dem Behälterboden alsbald ausfüllt, wobei es zunächst an der Aussenseite des Schaufelrades zu einer gleichsam spanabhebenden Bearbeitung und schliesslich zu einem Blockieren kommt.

Im übrigen hat sich gezeigt, dass es für eine günstige Aufbereitung mit möglichst hoher Trennschärfe nicht ausreicht, wenn in dem Behälter überhaupt nur eine Schwertrübe vorhanden ist, bzw. wenn diese zur Vermeidung einer Schwertrübeentmischung lediglich irgendwie in Bewegung gehalten wird, da bei bestimmten Strömungszuständen insbesondere in der Sinkkammer zu viel Schwimmgut in die Aushebekammer gelangt und dort als Verunreinigung mitausgetragen wird.

Der vorliegenden Erfindung liegt die Aufgabe zugrunde, einen gattungsgemässen Sinkscheider mit hoher Trennschärfe zu schaffen, der insbesondere für eine Aufbereitung von Autoschrott geeignet ist, wobei mithin einerseits sichergestellt sein soll, dass möglichst wenig Schwimmgut in die Aushebekammer gelangt und aus dieser zusammen mit dem Sinkgut ausgetragen wird und andererseits, dass das der Aushebekammer zugeführte Sinkgut problemlos ausgetragen werden kann.

Als Lösung dieser Aufgabe ist erfindungsgemäss vorgesehen, dass die Drehachse des Schaufelrades parallel zur Trennwand verläuft, dass die Schaufeln des Schaufelrades am Umfang offen sind und die Drehrichtung des Schaufelrades derart gerichtet ist, dass der untere Abschnitt des kreisförmigen Bewegungspfades der Schaufeln auf den zwischen der Trennwand und dem Boden gebildeten Spalt hingerichtet ist, dass der Behälterboden im Bereich der Aushebekammer in Anpassung an die radial aussen verlaufende Bewegungsbahn der Schaufeln kreisbogenförmig ausgebildet ist, und dass die Schwertrübeströmung in der Sinkkammer parallel zur Trennwand bzw. zur Drehachse des Schaufelrades verläuft, wobei in der Sinkkammer eine laminare Strömung vorhanden ist.

Während erfindungsgemäss u.a. erkannt worden ist, dass in der Sinkkammer bei einer laminaren Strömung ideale Trennbedingungen herrschen, die einerseits eine Entmischung der Schwertrübe verhindern, es aber andererseits Schwimmgutteilchen, die zunächst von absinkendem Schwimmgut mit unter den Schwertrübespiegel gerissen worden sind, ermöglichen, weitgehend zum Schwertrübespiegel aufzusteigen, hat es sich gezeigt, dass es vorteilhaft ist, wenn demgegenüber in der Aushebekammer eine turbulente Strömung vorhanden ist.

Der relativ schmale Spalt zwischen der Unterseite der Trennwand und dem Behälterboden kann über seine Länge die gleiche Höhe aufweisen, in Ausgestaltung der Erfindung bzgl. seiner Höhe über seine Länge zunehmen und keilförmig ausgebildet sein.

Obwohl es grundsätzlich möglich ist, dass zwischen dem Sinkkammerboden und dem Aushebekammerboden ein Absatz bzw. eine Stufe vorhanden ist, ist bevorzugt vorgesehen, dass der Sinkkammerboden stetig in den Aushebekammerboden übergeht, um irgendwelche Nesterbildungen und die Möglichkeit von Verkeilungen zu verhindern. Aus dem letztgenannten Grunde ist weiterhin bevorzugt vorgesehen, dass die Schaufeln des Schaufelrades einen kleinsten Abstand zum Aushebekammerboden aufweisen, der etwa einem Viertel der (mittleren) Teilchengrösse des Sinkgutes entspricht, da sich gezeigt hat, dass die Aushebekammer dann durch das Schaufelrad jeweils weitgehend zu entleeren ist. Dagegen ist der kleinste Abstand der Schaufeln im Bereich der Trennwand bevorzugt grösser und entspricht etwa der (mittleren) Teilchengrösse des Sinkgutes, wobei es nicht zu irgendwelchen Verkeilungen kommt.

In weiterer bevorzugter Ausgestaltung der vorliegenden Erfindung weist sowohl die Sinkkammer als auch die Aushebekammer jeweils einen Schwertrübezufluss auf, wobei der Schwertrübezufluss für die Sinkkammer bevorzugt mit einem relativ geringen Abstand unterhalb des Schwertrübespiegels angeordnet ist, während der Schwertrübezufluss der Aushebekammer bevorzugt benachbart zum Aushebekammerboden angeordnet sein kann. Eine solche Ausbildung begünstigt in der Sinkkammer die dort erfindungsgemäss vorgesehene laminare Strömung und kann bei geeigneter Anordnung dazu beitragen, das Schwimmgut schnell auszutragen. Die Anordnung des Schwertrübeflusses in der Aushebekammer in Bodennähe hat sich als zweckmässig erwiesen, weil hierdurch evtl. Ablagerungen gelöst werden, bzw. weil es bei einer solchen Ausbildung gar nicht erst zu Ablagerungen kommt. Im übrigen hat es sich zur Schaffung idealer Trennverhältnisse als zweckmässig herausgestellt, wenn die Schwertrübezuflüsse für die Sinkkammer und die Aushebekammer einander entgegengerichtet angeordnet sind.

Bevorzugte Ausgestaltungen der vorliegenden Erfindung sind in den Unteransprüchen beschrieben.

Die Erfindung ist nachstehend an einem Ausführungsbeispiel unter Bezugnahme auf eine Zeichnung weiter erläutert. Es zeigt:

Fig. 1 eine Draufsicht auf einen erfindungsgemässen Sinkscheider;

Fig. 2 einen Schnitt durch den Sinkscheider gemäss Fig. 1 in Richtung der Schnittlinie II-II in Fig. 4 gesehen;

Fig. 3 einen Schnitt durch den Sinkscheider gemäss den Fig. 1 und 2 in Richtung der Schnittlinie III-III in Fig. 4 gesehen; und

Fig. 4 einen Schnitt durch den Sinkscheider gemäss den Fig. 1 bis 3 in Richtung der Schnittlinie IV-IV in Fig. 1 gesehen.

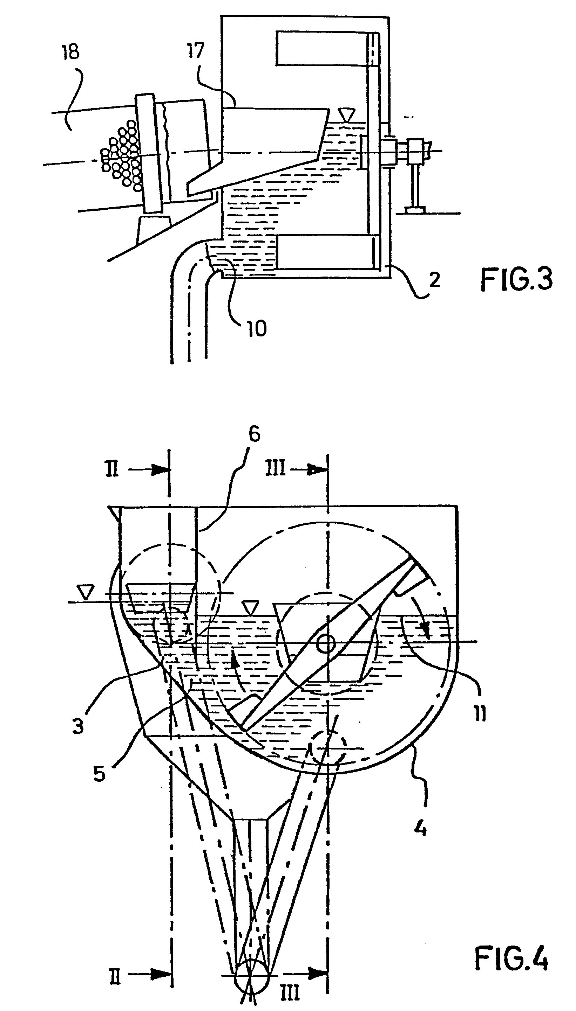

Die Zeichnung zeigt einen Sinkscheider mit einem Schwertrübe enthaltenden Behälter 12, der mittels einer sich von oberhalb des Schwertrübespiegels in die Schwertrübe erstreckenden Trennwand 6 in eine Sinkkammer 1 und eine hiermit kommunizierende Aushebekammer 2 unterteilt ist (s. Fig. 4). Der Boden 3 der Sinkkammer 1 ist mit einem Gefälle in Richtung auf die Aushebekammer 2 ausgeführt und geht in den Boden 4 der Aushebekammer 2 im Bereich der Trennwand 6 über.

Der in Form einer ebenen Fläche ausgebildete Übergang zwischen den Böden 3 und 4 der Sinkkammer 1 bzw. der Aushebekammer 2 bildet gleichzeitig die untere Begrenzung eines Sinkspaltes 5, der nach oben durch die Trennwand 6 begrenzt ist und über seine Länge keilförmig ausgebildet ist, was in der Zeichnung nicht dargestellt ist.

Das Ausheben des Sinkgutes aus der Aushebekammer 2 erfolgt mittels eines Schaufelrades, welches einen rotierenden Arm 8 aufweist, an dessen äusseren Enden jeweils eine Schaufel 7 angeordnet ist. Der Arm 8 ist derart angeordnet, dass die Schaufeln 7 mit einem kleinsten Abstand zu dem im Querschnitt kreisbogenförmig ausgebildeten Boden 4 der Aushebekammer 2 entsprechend einem Viertel der mittleren Teilchengrösse des Aufbereitungsgutes rotieren. Im Bereich der Trennwand — also etwa bei kürzestem senkrechten Abstand zum Trennspalt 5 — entspricht der kleinste Abstand der Schaufeln 7 etwa der mittleren Teilchengrösse des Aufbereitungsgutes.

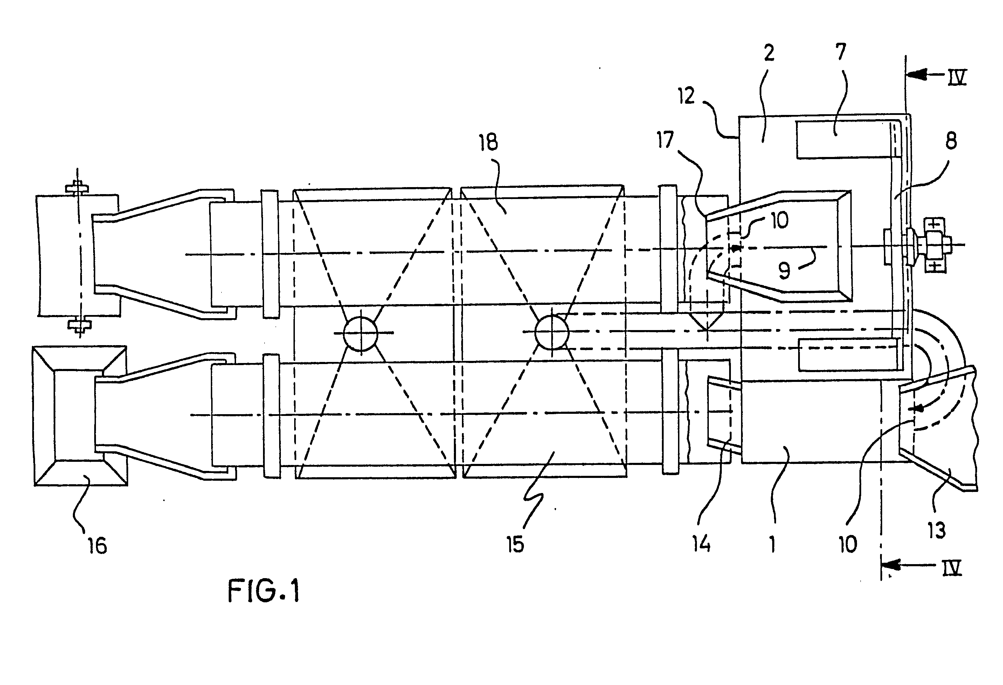

Sowohl die Sinkkammer 2 als auch die Aushebekammer 3 besitzen jeweils einen Schwertrübezufluss 10 (s. Fig. 1). Der Schwertrübezufluss 10 in der Sinkkammer 1 ist mit relativ geringem Abstand unterhalb des Schwertrübespiegels angeordnet. Dagegen ist der Schwertrübezufluss 10 in der Aushebekammer 2 im Bereich des Bodens 4 angeordnet. Die Schwertrübezuflüsse 10, 10 der Sinkkammer 1 und der Aushebekammer 2 sind so angeordnet, dass die Strömungsrichtungen einander entgegengerichtet sind.

Die Arbeitsweise des erfindungsgemässen Sinkscheiders ist wie folgt:

Das Aufbereitungsgut wird über eine Schurre 13 in die Sinkkammer 1 eingegeben. In der Sinkkammer 1 herrscht eine durch die zuströmende Schwertrübe erzeugte laminare Strömung, so dass das Schwimmgut über eine Wehrkante und eine Schurre 14 in ein erstes Trommelsieb 15 eingeleitet wird, wo es im ersten Abschnitt auf einer Abtropfstrecke von noch an ihm anhaftender Schwertrübe getrennt wird. Im zweiten Abschnitt des Trommelsiebes 15 wird das Schwimmgut durch einen Spülwasserkreislauf gereinigt. Aus dem Trommelsieb 15 wird das Schwimmgut sodann direkt in einen Auffangbehälter 16 geleitet.

Das Schwergut sinkt der Schwerkraft folgend in der Sinkkammer 1 auf deren Boden 3 ab, wo die Sinkbewegung durch die schräge Ausbildung des Bodens 3 in eine seitliche Bewegung in Richtung auf die Aushebekammer 2 umgeleitet wird.

Das in der Aushebekammer 2 angeordnete Schaufelrad 7, 8 wird durch einen in der Zeichnung nicht dargestellten elektrischen Antrieb angetrieben. Die Schaufeln 7 werden dabei so gedreht, dass sie im Bereich der Trennwand 6 eine Aufwärtsbewegung ausführen. Hierdurch wird das abgesunkene Schwergut z.T. bereits aufgenommen, bevor es den Boden 4 der Aushebekammer 2 erreicht hat. Wenn eine Schaufel 7 des Schaufelrades 7, 8 ihre obere Stellung erreicht hat, fällt das in ihr enthaltene Gut in eine Schurre 17, von welcher es in ein Trommelsieb 18 gleitet wird, in dem es in gleicher Weise von der Schwertrübe getrennt und anschliessend gespült wird, wie dieses weiter oben unter Bezugnahme auf das Schwimmgut beschrieben ist. Sofern das aus der Aushebekammer 2 ausgetragene Schwergut Eisenbestandteile enthält, ist im Auslauf des Trommelsiebes 18 eine Magnettrommel angeordnet, von der aus das ausgesiebte Gut entweder auf ein Verleseband oder in einen Behälter geleitet wird.

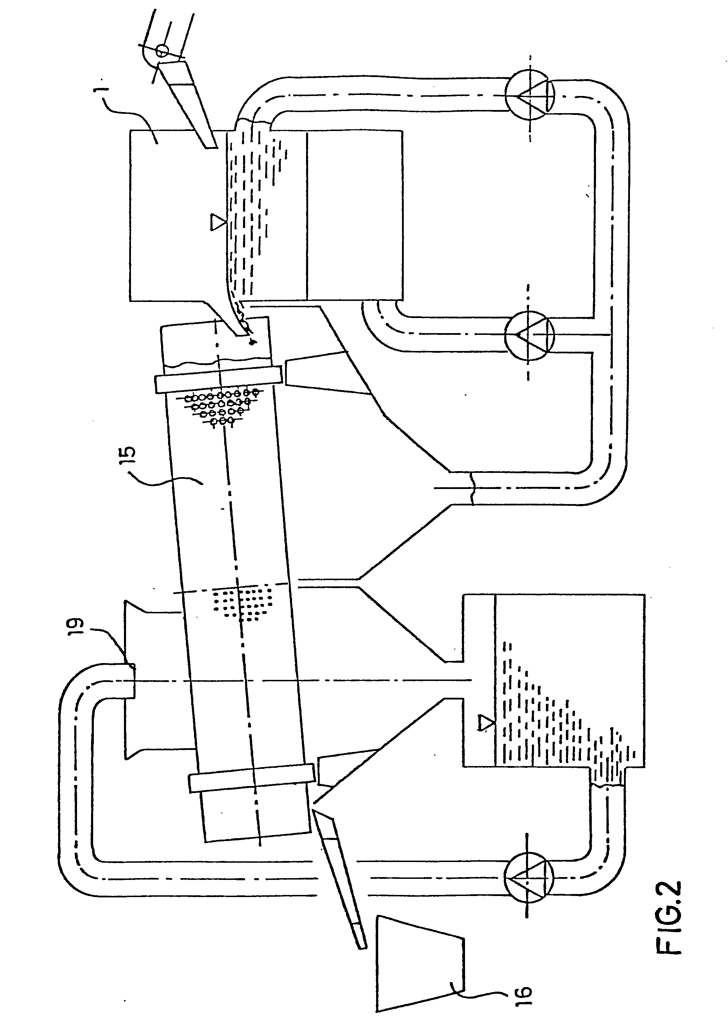

In Fig. 2 ist ein Längsschnitt durch die Sinkkammer 1 mit dem dazugehörenden Rohrleitungs- und Pumpensystem dargestellt, wobei weiterhin das Trommelsieb 15 für das Schwimmgut erkennbar ist. Die Sieböffnungen des Trommelsiebes 15 und des in Fig. 2 nicht dargestellten Trommelsiebes 18 sind so bemessen, dass die kleinsten Teile des Aufbereitungsgutes hindurchfallen und mit der Schwertrübe durch das Rohrleitungssystem und die Pumpen umgewälzt werden. Dadurch wir die Schwertrübe im gesamten System ständig aufgerührt, so dass sich in keinem Teil Ablagerungen bilden oder Entmischungen einstellen können. In der anschliessenden Spülstrecke 19 sind die Sieböffnungen dann so bemessen, dass kein Aufbereitungsgut mehr hindurchfallen kann.

**Patentansprüche**

1. Sinkscheider zum Trennen verschiedenartiger Bestandteile eines Aufbereitungsgutes, mit einem Schwertrübe enthaltenden Behälter (12), der mittels einer sich von oberhalb des Schwertrübespiegels in die Schwertrübe erstreckenden Trennwand (6) in eine Sinkkammer (1) und eine hiermit kommunizierende Aushebekammer (2) unterteilt ist, wobei in der Sinkkammer (1) zum Flüssigkeitsspiegel aufgeschwommenes Schwimmgut über ein Überlaufwehr nach aussen abzugeben ist und auf den Behälterboden (3, 4) abgesunkenes Sinkgut mittels eines in der Aushebekammer (2) um eine horizontale Achse drehbar angeordneten, angetriebenen Schaufelrades (7, 8) aus dem Behälter (12) auszuheben und von dem Schaufelrad (7, 8) nach aussen abzugeben ist, dadurch gekennzeichnet, dass die Drehachse (9) des Schaufelrades (7, 8) parallel zur Trennwand (6) verläuft; dass die Schaufeln (7) des Schaufelrades (7, 8) am Umfang offen sind und die Drehrichtung des Schaufelrades (7, 8) derart gerichtet ist, dass der untere Abschnitt des kreisförmigen Bewegungspfades der Schaufeln (7, 7) auf den zwischen der Trennwand (6) und dem Boden (3, 4) gebildeten Spalt (5) hingerichtet ist; dass der Behälterboden (3, 4) im Bereich der Aushebekammer (2) in Anpassung an die radial aussen verlaufende Bewegungsbahn der Schaufeln (7, 7) kreisbogenförmig ausgebildet ist; und dass die Schwertrübeströmung in der Sinkkammer (1) parallel zur Trennwand (6) bzw. zur Drehachse (9) des Schaufelrades (7, 8) verläuft, wobei in der Sinkkammer (1) eine laminare Strömung vorhanden ist.

2. Sinkscheider nach Anspruch 1, dadurch gekennzeichnet, dass in der Aushebekammer (2) eine turbulente Strömung vorhanden ist.

3. Sinkscheider nach Anspruch 1 oder 2, dadurch gekennzeichnet, dass der zwischen der Trennwand (6) und dem Boden (3, 4) gebildete Spalt (5) in seiner Höhe über seine Länge zunimmt.

4. Sinkscheider nach Anspruch 3, dadurch gekennzeichnet, dass der Spalt (5) keilförmig ausgebildet ist.

5. Sinkscheider nach einem oder mehren der vorhergehenden Ansprüche, dadurch gekennzeichnet, dass der Sinkkammerboden (3) mit einem ebenen Abschnitt stetig in den Aushebekammerboden (4) übergeht.

6. Sinkscheider nach einem oder mehreren der vorhergehenden Ansprüche, dadurch gekennzeichnet, dass die Schaufeln (7, 7) des Schaufelrades (7, 8) einen kleinsten Abstand zum Aushebekammerboden (4) aufweisen, der etwa einem Viertel der Teilchengrösse des Sinkgutes entspricht.

7. Sinkscheider nach einem oder mehreren der vorhergehenden Ansprüche, dadurch gekennzeichnet, dass die Schaufeln (7, 7) jeweils im Bereich der Trennwand (6) einen Abstand zum Boden (4) aufweisen, der etwa der Teilchengrösse des Sinkgutes entspricht.

8. Sinkscheider nach einem oder mehreren der vorhergehenden Ansprüche, dadurch gekennzeichnet, dass sowohl die Sinkkammer (1) als auch die Aushebekammer (2) jeweils einen Schwertrübezufluss (10, 10) aufweisen.

9. Sinkscheider nach Anspruch 8, dadurch gekennzeichnet, dass der Schwertrübezufluss (10) für die Sinkkammer (1) mit einem relativ geringen Abstand unterhalb des Schwertrübespiegels (11) angeordnet ist.

10. Sinkscheider nach Anspruch 8 oder 9, dadurch gekennzeichnet, dass der Schwertrübezufluss (10) der Aushebekammer (2) benachbart zum Aushebekammerboden (4) angeordnet ist.

11. Sinkscheider nach einem der Ansprüche 8 bis 10, dadurch gekennzeichnet, dass die Schwertrübezuflüsse (10, 10) für die Sinkkammer (1) und die Aushebekammer (2) einander entgegengerichtet angeordnet sind.

12. Sinkscheider nach einem oder mehreren der vorhergehenden Ansprüche, dadurch gekennzeichnet, dass der Sinkkammer (1) und/oder der Aushebekammer (2) als Abtropfeinrichtung jeweils ein angetriebenes Sieb (15 bzw. 18) nachgeordnet ist.

13. Sinkscheider nach Anspruch 12, dadurch gekennzeichnet, dass die Abtropfeinrichtungen (15, 18) als Trommelsiebe ausgebildet sind.

14. Sinkscheider nach Anspruch 12 oder 13, dadurch gekennzeichnet, dass unterhalb der Abtropfeinrichtungen (15, 18) eine Auffangeinrichtung für aus der Abtropfeinrichtung (15 bzw. 18) nach aussen abgegebene Schwertrübe angeordnet ist, aus welcher die aufgefangene Schwertrübe über eine Rohrleitung in den Behälter (12) zurückzuführen ist.

## Claims

1. A heavy-medium separator for separating different constituents in a material undergoing processing, comprising a tank (12) which contains a heavy medium and which is divided into a settling chamber (1) and, communicating therewith, a lifting chamber (2) by means of a partition (6) extending into the heavy medium from above the surface of the heavy medium, material which has floated to the surface of the liquid in the settling chamber (1) being withdrawn to the exterior over an overflow sill and settled material which has sunk to the tank bottom (3, 4) being lifted out of the tank (12) by means of a driven bucket wheel (7, 8) arranged to rotate about a horizontal axis in the lifting chamber (2), and being discharged to the exterior by said bucket wheel (7, 8), characterised in that the axis of rotation (9) of the bucket wheel (7, 8) extends parallel to the partition (6); that the buckets (7) of the bucket wheel (7, 8) are open at the periphery and the direction of rotation of the bucket wheel (7, 8) is so directed that the bottom part of the circular path of movement of the buckets (7, 7) is directed towards the gap (5) formed between the partition (6) and the bottom (3, 4); that the tank bottom (3, 4) is in the form of a circular arc in the region of the lifting chamber (2) to match the radially outwardly extending path of movement of the buckets (7, 7); and that the heavy medium flow in the settling chamber (1) is parallel to the partition (6) or to the axis of rotation (9) of the bucket wheel (7, 8), while there is a laminar flow in the settling chamber (1).

2. A heavy-medium separator according to claim 1, characterised in that there is a turbulent flow in the lifting chamber (2).

3. A heavy-medium separator according to claim 1 or 2, characterised in that the gap (5) formed between the partition (6) and the base (3, 4) increases in height over its length.

4. A heavy-medium separator according to claim 3, characterised in that the gap (5) is wedge-shaped.

5. A heavy-medium separator according to one or more of the preceding claims, characterised in that the settling chamber base (3) merges into the lifting chamber base (4) continuously by a flat portion.

6. A heavy-medium separator according to one or more of the preceding claims, characterised in that the buckets (7, 7) of the bucket wheel (7, 8) have a minimum distance from the lifting chamber base (4) corresponding approximately to one-quarter of the particle size of the settled material.

7. A heavy-medium separator according to one or more of the preceding claims, characterised in that the buckets (7, 7) in the area of the partition (6) each have a distance from the base (4) corresponding approximately to the particle size of the settled material.

8. A heavy-medium separator according to one or more of the preceding claims, characterised in that both the settling chamber (1) and the lifting chamber (2) each have a heavy-medium inlet (10, 10).

9. A heavy-medium separator according to claim 8, characterised in that the heavy-medium inlet (10) for the settling chamber (1) is disposed at a relatively short distance beneath the heavy-medium surface (11).

10. A heavy-medium separator according to claim 8 or 9, characterised in that the heavy-medium inlet (10) of the lifting chamber (2) is disposed adjacent the lifting chamber base (4).

11. A heavy-medium separator according to any one of claims 8 to 10, characterised in that the heavy-medium inlets (10, 10) for the settling chamber (1) and the lifting chamber (2) are arranged in opposite directions to one another.

12. A heavy-medium separator according to one or more of the preceding claims, characterised in that the settling chamber (1) and/or the lifting chamber (2) are each followed by a driven screen (15 and 18) as dropping means.

13. A heavy-medium separator according to claim 12, characterised in that the dropping means (15, 18) are in the form of drum screens.

14. A heavy-medium separator according according to claim 12 or 13, characterised in that a collector means is disposed beneath the dropping means (15, 18) to receive heavy medium discharged outwardly from the dropping means (15 and 18), the collected heavy medium being returned to the tank (12) form the collecting means via a pipeline.

## Revendications

1. Séparateur par liquide dense destiné à la séparation de différents composants d'un produit à traiter, muni d'un bac (12) contenant un liquide dense et qui est divisé, par une paroi de séparation (6) qui part d'un point situé au-dessus du niveau du liquide dense pour plonger dans le dit liquide, en une chambre de décantation (1) et en une chambre de prélèvement (2) communiquant avec la précédente, les flottants situés à la surface du liquide dans la chambre de décantation (1) étant évacués vers l'extérieur par un déversoir de trop-plein alors que les plongeants descendus sur le fond de bac (3, 4) doivent être prélevés hors du bac (12) au moyen d'une roue à aubes (7, 8) entraînée et montée, dans la chambre de prélèvement (2), tournante autour d'un axe horizontal, puis évacués vers l'extérieur par la roue à aubes (7, 8), caractérisé par le fait que l'axe de rotation (9) de la roue à aubes (7, 8) s'étend parallèlement à la paroi de séparation (6); que les aubes (7) de la roue à aubes (7, 8) sont ouvertes à la périphérie et que le sens de rotation de la roue à aubes (7, 8) est tel que la portion inférieure du tracé du mouvement, de forme circulaire, des aubes (7, 7) soit dirigé vers la fente (5) formée entre la paroi de séparation (6) et le fond (3, 4); que le fond de bac (3, 4) dans la zone de la chambre de prélèvement (2) présente une forme en arc de cercle pour s'adapter à la trajectoire extérieure radiale des aubes (7, 7); et que l'écoulement du liquide dense dans la chambre de décantation (1) est parallèle à la paroi de séparation (6) ou à l'axe de rotation (9) de la roue à aubes (7, 8), l'écoulement dans la chambre de décantation (1) étant un écoulement laminaire.

2. Séparateur par liquide dense selon la revendication 1, caractérisé par le fait que, dans la chambre de prélèvement (2), existe un écoulement turbulent.

3. Séparateur par liquide selon la revendication 1 ou 2, caractérisé par le fait que la fente (5) formée entre la paroi de séparation (6) et le fond (3, 4), augmente en hauteur quand on suit sa longueur.

4. Séparateur par liquide dense selon la revendication 3, caractérisé par le fait que la fente (5) est en forme de coin.

5. Séparateur par liquide dense selon l'une des revendications précédentes, caractérisé par le fait que le fond de chambre de décantation (3) passe sans interruption en fond de chambre de prélèvement (4) par le biais d'une portion plane.

6. Séparateur par liquide dense selon l'une des revendications précédentes, caractérisé par le fait que les aubes (7, 7) de la roue à aubes (7, 8) présentent un écartement minimal par rapport au fond de chambre de prélèvement (4), écart correspondant à peu près au quart de la taille des particules du produit à traiter.

7. Séparateur par liquide dense selon l'une des revendications précédentes, caractérisé par le fait que les aubes (7, 7) présentent chacune, dans la zone de la paroi de séparation (6), un écartement par rapport au fond (4), qui correspond à peu près à la taille des particules du produit à traiter.

8. Séparateur par liquide dense selon l'une des revendications précédentes, caractérisé par le fait que la chambre de décantation (1) ainsi que la chambre de prélèvement (2) possèdent chacune une arrivée de liquide dense (10, 10).

9. Séparateur par liquide dense selon la revendication 8, caractérisé par le fait que l'arrivée de liquide dense (10) destinée à la chambre de décantation (1) est disposée à une distance relativement faible sous le niveau du liquide dense (11).

10. Séparateur par liquide dense selon la revendication 8 ou 9, caractérisé par le fait que l'arrivée de liquide dense (10) de la chambre de prélèvement (2) est située à proximité du fond de chambre de prélèvement (4).

11. Séparateur par liquide dense selon l'une des revendications 8 à 10, caractérisé par le fait que les arrivées de liquide dense (10, 10) destinée à la chambre de décantation (1) et à la chambre de prélèvement (2) sont orientées chacune dans une direction opposée à celle de l'autre.

12. Séparateur par liquide dense selon l'une des revendications précédentes, caractérisé par le fait que, en aval de la chambre de décantation (1) et/ou de la chambre de prélèvement (2), se trouve respectivement un tamis entraîné (15 ou 18) se présentant sous la forme d'un dispositif d'égouttage.

13. Séparateur par liquide dense selon la revendication 12, caractérisé par le fait que les dispositifs d'égouttage (15, 18) se présentent sous la forme de tamis à tambour.

14. Séparateur par liquide dense selon la revendication 12 ou 13, caractérisé par le fait que, sous les dispositifs d'égouttage (15, 18), se trouve un moyen collecteur destiné au liquide dense sortant du dispositif d'égouttage (15 ou 18), moyen collecteur à la sortie duquel le liquide dense qui a été collecté est renvoyé dans le bac (12) par une conduite tubulaire.

FIG.1

FIG.2

FIG.3

FIG.4